# FASCICULE DE BREVET EUROPEEN

(11) **EP 0 648 938 B1**
(45) Date de publication et mention de la délivrance du brevet: **02.05.1997**
(21) Numéro de dépôt: 94402285.4
(22) Date de dépôt: 12.10.1994
(51) Int. Cl.: F04D 29/32, F01D 5/02, F01D 5/06

(54) **Turboréacteur équipé de disques de compensation à l'intérieur du rotor du compresseur HP et procédé de fabrication de tels disques**
Gasturbinentriebwerk mit Ausgleichscheiben in dem Rotor des Hochdruckverdichter und Verfahren zur Herstellung
Gas turbine engine with compensation disks inside the rotor of the high pressure compressor and manufacturing method for these disks

(30) Priorité: 13.10.1993 FR 9312162
(43) Date de publication de la demande: 19.04.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Naudet, Jacky Serge, F-91070 Bondoufle (FR)

(56) Documents cités:
- US-A- 2 922 618
- US-A- 4 743 165
- US-A- 5 213 475

## Description

### Domaine de l'invention

L'invention concerne les turboréacteurs dont le compresseur haute pression est équipé de disques raidisseurs sur la face interne du rotor de celui-ci. De tels disques ont pour objet de compenser les efforts radiaux fournis par les aubes ou aubages du rotor fixés sur la face externe de celui-ci.

### Art antérieur et problème posé

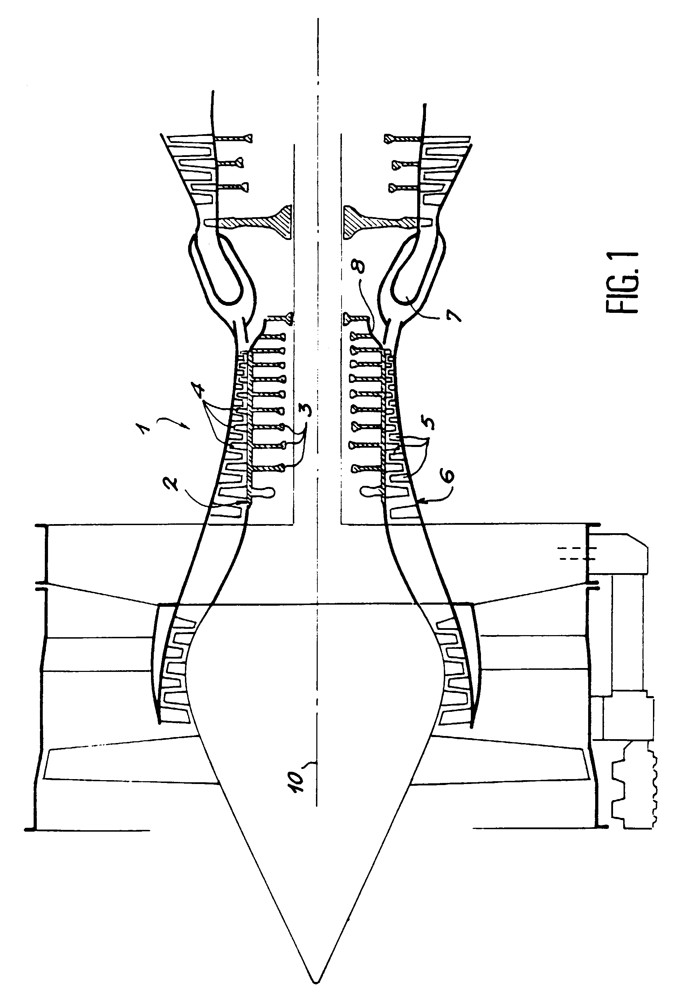

En référence à la figure 1, le rotor 2 d'un compresseur haute pression 1 d'un turboréacteur possède des aubes 4 qui ont pour fonction, en coopération avec les aubes 5 du stator 6, de comprimer le flux d'air interne du réacteur avant de l'envoyer vers une chambre de combustion 7. Ce rotor 2 possède en outre un cône de sortie aval 8 se rétrécissant par rapport à l'axe 10 du rotor 2.

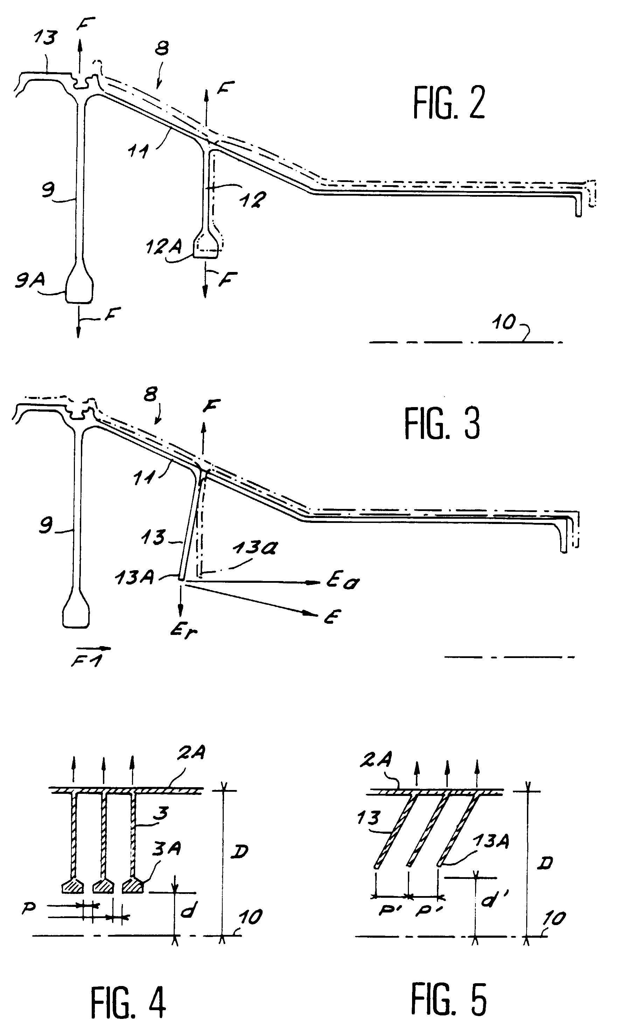

En référence à la figure 2, un cône de sortie 8 de l'art antérieur comprend principalement un premier disque classique 9, perpendiculaire à l'axe 10 du rotor et possédant à son extrémité une masselotte 9A. De même, au milieu de la partie conique 11 de ce cône 8, se trouve un deuxième disque classique 12, lui-même surmonté également d'une masselotte 12A. De manière générale, ce deuxième disque classique 12 est moins large que le premier disque classique 9.

Ces disques classiques raidisseurs 9 et 12 ont pour fonction d'éviter des déformations du rotor, c'est-à-dire de sa virole amont 13 et de la partie de sortie conique 11. En effet, les aubes du rotor, sous l'effet de la force centrifuge, ont tendance à étirer vers l'extérieur celui-ci. Les disques classiques 9 et 12 permettent d'équilibrer cette force en créant une inertie interne, notamment grâce à leurs masselottes respectives 9A et 12A. En effet, celles-ci sont placées sur des rayons bien inférieurs par rapport à l'axe de rotation du rotor 10 que le pied des aubes sur la virole. Ce phénomène de compensation est symbolisé sur la figure par des flèches verticales, de sens opposé, référencées F.

Ces disques classiques 9 et 12 ont pour inconvénient d'être d'une masse relativement importante, compte tenu principalement de leurs masselottes 9A et 12A. En outre, sur la figure 2, a été représenté en traits mixtes le déplacement du cône de sortie lors du fonctionnement du moteur. Il subit donc à la fois un élargissement et une élongation vers l'aval. US-A-5 213 475 montre un exemple de telles réalisations.

Le but de l'invention est de tenter d'alléger le rotor tout en évitant des déformations dues aux aubages.

### Résumé de l'invention

A cet effet, un premier objet principal de l'invention est un turboréacteur comprenant en outre un rotor de compresseur haute pression comprenant lui-même une virole et un cône de sortie équipés de disques à l'intérieur du rotor, pour compenser les forces centrifuges appliquées par les aubages du rotor à ce dernier.

Selon l'invention, certains disques de compensation sont coniques par rapport à l'axe de rotation du rotor et ne possèdent pas de masselottes.

De préférence, dans le cône de sortie, le disque de compensation est incliné en amont du turboréacteur.

Dans ce cas, on prévoit également un disque non conique avec une masselotte et placé dans la partie amont du cône de sortie.

Un deuxième objet principal de l'invention est un procédé de fabrication d'un rotor d'un compresseur haute pression d'un turboréacteur, comprenant les étapes suivantes :
- forgeage pour obtenir des pièces brutes de forge constituant des tronçons de virole et un cône de sortie, telles qu'évoquées dans les paragraphes précédents, la pièce brute du cône de sortie ayant une forme qui englobe le cône de sortie final sans présenter d'évidements par rapport à l'enveloppe de ce cône de sortie ;
- soudage bout à bout par friction de différents tronçons ; et du cône de sortie, et
- usinage des formes définitives du rotor.

De préférence, le cône de sortie est constitué d'un alliage à base de nickel élaboré par la technique dite "La Métallurgie des Poudres".

### Liste des figures

L'invention et ses caractéristiques techniques seront mieux comprises à la lecture de la description suivante acompagnée de quelques figures représentant :
- figure 1, en coupe, un turboréacteur de l'art antérieur susceptible d'être transformé selon l'invention ;
- figure 2, en coupe, un cône de sortie d'un compresseur haute pression d'un turboréacteur de l'art antérieur ;
- figure 3, en coupe, un cône de sortie d'un compresseur haute pression d'un turboréacteur selon l'invention ;
- figure 4, en coupe, des disques classiques utilisés dans les turboréacteurs de l'art antérieur ;
- figure 5, en coupe, des disques de compensation selon l'invention ;
- figures 6 et 7, la déformation d'une ébauche d'un cône de sortie de l'art antérieur ;
- figure 8, en coupe, une autre ébauche d'un cône de sortie de l'art antérieur ; et
- figure 9, en coupe, une ébauche d'un cône de sortie selon l'invention.

### Description détaillée d'une réalisation de l'invention

En se reportant à la figure 3, le cône de sortie selon l'invention a été représenté avec un disque classique 9 placé à l'entrée de celui-ci. Par contre, ce cône de sortie 8 possède sur sa partie conique 11 un disque de compensation 13 incliné par rapport à la verticale. Le sens de l'inclinaison est tel que ce disque de compensation 13 a tendance à être plutôt perpendiculaire à la paroi interne de la partie conique 11 du cône de sortie 8. En d'autres termes, son extrémité 13A est orientée en amont par rapport au sens d'écoulement du flux.

Comme l'indique la flèche horizontale F₁' orientée de gauche à droite, lorsque le rotor tourne à grande vitesse, l'extrémité 13A du disque de compensation incliné 13 a tendance à se rapprocher de l'axe de rotation 10 du rotor, c'est-à-dire d'aller en aval. Du fait de l'inclinaison de ce disque de compensation incliné 13 et de la conicité de la partie conique 11, l'effort E appliqué à l'extrémité 13A du disque incliné de compensation 13 a une composante axiale Eₐ et une composante radiale Eᵣ. Cette composante radiale Eᵣ compense l'effort F représenté en regard de la base du disque de compensation incliné 13.

Sur cette figure 3, on a également schématisé en traits mixtes la position du cône de sortie 8 lors du fonctionnement du turboréacteur.

En référence maintenant à la figure 4, une partie de la virole d'un compresseur haute pression d'un turboréacteur de l'art antérieur a été représenté avec trois disques classique, c'est-à-dire du type à masselotte. Ces disques 3 sont perpendiculaires à la virole 2A du rotor. Leurs masselottes respectives 3A se trouvent à une distance d de l'axe 10 du turboréacteur. Cette distance d est relativement réduite compte tenu de la largeur des disques 3. De plus, on a schématisé par des intervalles p les espaces relativement restreints séparant les masselottes 3A les unes des autres. On constate ainsi qu'il est peu aisé d'introduire des machines ou dispositifs d'entretien ou ae réparation entre les disques classiques 3 de l'art antérieur.

En se référant à la figure 5, le même type de coupe a été réalisée pour une partie de la virole d'un compresseur haute pression d'un turboréacteur selon l'invention. On constate que les disques de compensation 13 sont bien inclinés par rapport à un plan perpendiculaire à l'axe 10 du turboréacteur et à la portion de virole 2A. De plus, comme leur largeur est relativement plus faible que celle des disques de l'art antérieur, la distance d' séparant leur extrémité 13A de l'axe 10 du turboréacteur, est plus importante. On constate également que l'espace p' séparant chaque disque de compensation 13 est plus important que l'espace p de la figure 4. Ceci a pour avantage de permettre l'introduction de dispositifs d'entretien et de réparation entre ces disques de compensation 13.

On note que les disques de compensation 13 sont selon l'invention toujours inclinés en amont par rapport au trajet du flux d'air dans le turboréacteur.

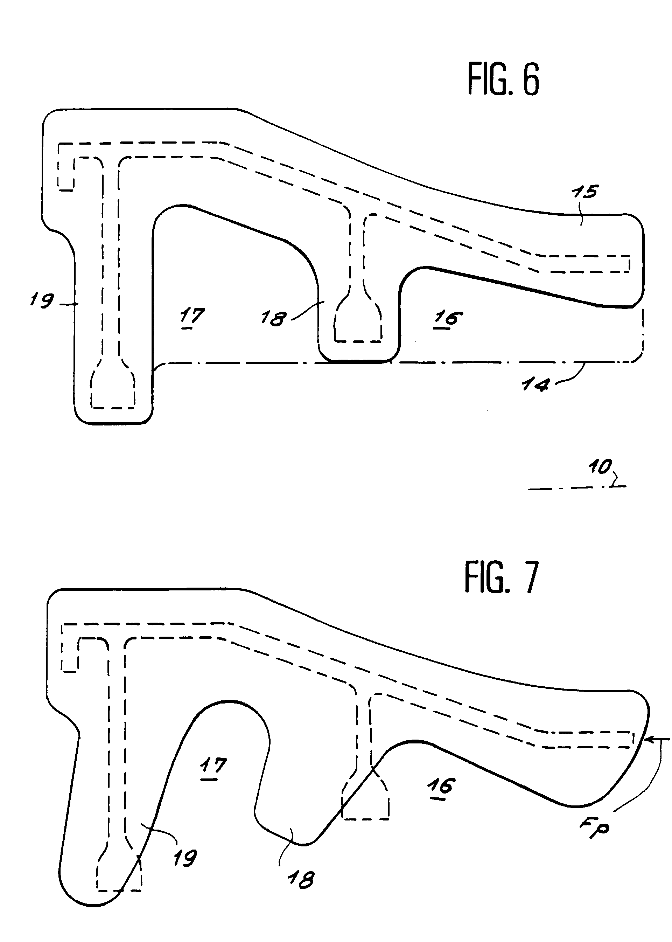

La figure 6 montre une ébauche ou une pièce brute de forge destinée à constituer un cône de sortie référencé 8 sur la figure 2. On constate en outre que la partie de gauche 19 englobant le futur disque 9 de la figure 2 est relativement large, c'est-à-dire que cette branche est encombrante, notamment en direction de l'axe 10 du turboréacteur. La broche centrale 18 englobant le futur disque 12 de la figure 2 est plus restreinte et n'occasionne qu'un encombrement moyen. On constate donc que des cavités 17 et 16 sont ménagées à la fois entre ces deux branches 18 et 19 et entre la branche centrale 18 et l'extrémité gauche 15 de cette ébauche.

Or, en référence à la figure 7, pour réaliser le soudage par friction à la partie amont de la virole de ce cône de sortie, il faut exercer une force de pression Fₚ très importante à l'aval de cette pièce, comme le montre la flèche à la droite de cette figure 7. Si l'ébauche ou la pièce pièce brute a une configuration avec des évidements, tels que 16 et 17, cette force importante Fₚ imposerait à la pièce un pliage du type accordéon, comme le montre la forme de cette pièce sur la figure 7. Dans ce cas, il est donc nécessaire que cette ébauche ait une configuration, telle que celle représentée en traits mixtes, sur la figure 6, et référencée 14. En d'autres termes, les évidements 16 et 17 doivent être comblés. Il s'ensuit un poids et un volume de la pièce d'ébauche très important et des usinages ultérieurs également plus conséquents. Le coût de la pièce finie est donc nettement augmenté.

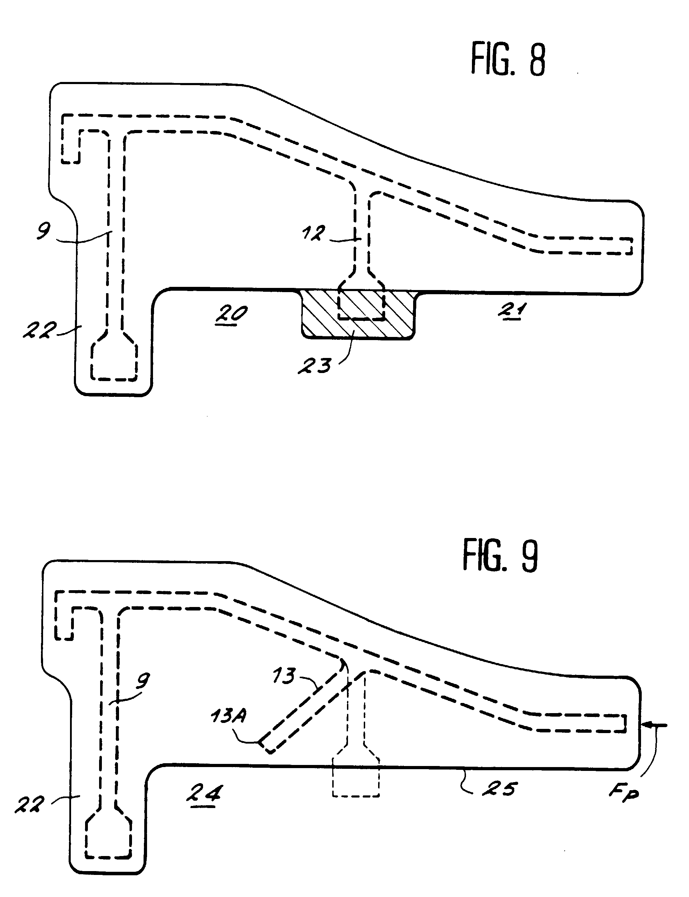

En référence à la figure 8, si on essaie de limiter le poids de l'ébauche, il est nécessaire de rajouter une partie centrale 23 au niveau du futur disque traditionnel 12 et de ménager des évidements relativement restreints 20 et 21 dans cette pièce.

En référence à la figure 9, si on remplace le disque traditionnel 12 par un disque de compensation selon l'invention 13, la pièce brute ou l'ébauche peut avoir un volume correspondant à celui de la pièce 8, sans le bossage central 23. Un effort important Fₚ peut donc être appliqué en aval pour procéder au soudage par friction de ce cône de sortie sur la virole du compresseur haute pression. Le coût de la pièce est ainsi limité par rapport à celui d'une pièce faite sur la base des disques traditionnel 12 et 9 de la figure 2.

Le procédé de fabrication du cône de sortie, tel qu'il vient d'être défini, pour un compresseur haute pression de turboréacteur, consiste donc successivement à effectuer les opérations suivantes :
1 - Une ébauche est d'abord forgée pour obtenir une pièce brute de forge dont la forme externe englobe le cône de sortie final sans présenter d'évidement, mis à part un évidement, repéré 24 sur la figure 9, et se trouvant entre la partie de gauche 22 de la pièce englobant le disque traditionnel 9 et la matière englobant le disque de compensation 13 selon l'invention. En d'autres termes, la surface 25 intérieure de ce cône de sortie est cylindrique et a un diamètre légèrement inférieur à celui délimité par l'extrémité 13A du disque de compensation 13.
2 - Il s'ensuit un soudage par friction de cette ébauche au reste de la virole constituant le tronçon central du compresseur haute pression du turboréacteur.
3 - Un usinage de l'ensemble permet d'obtenir les formes interne et externe définitives de tout le rotor.

On précise qu'une réalisation préférentielle du cône de sortie consiste à utiliser un superalliage à base de nickel élaboré par "La Métallurgie des Poudres".

L'utilisation de tels disques obliques permet donc une meilleure accessibilité axiale de l'espace interne à l'intérieur de la virole du compresseur haute pression. Les pièces brutes ou les ébauches utilisées sont de réalisation moins coûteuse, un gain de masse non négligeable étant obtenu.

## Revendications

1. Turboréacteur comprenant un rotor de compresseur haute pression comprenant lui-même une virole et un cône de sortie (8) équipés d'aubages et de disques (9, 13) à l'intérieur du rotor, pour compenser les forces centrifuges appliquées par les aubages au corps du rotor, caractérisé en ce que certains disques de compensation (13) sont coniques par rapport à l'axe de rotation (10) du rotor et ne possèdent pas de masselottes.

2. Turboréacteur selon la revendication 1, caractérisé en ce que dans le cône de sortie (8) du rotor, le disque de compensation (13) est incliné en amont du turboréacteur.

3. Turboréacteur selon la revendication 2, caractérisé en ce qu'il comprend un disque (9) avec une masselotte (9A) et placé dans la partie amont du cône de sortie (8).

4. Procédé de fabrication d'un rotor d'un compresseur haute pression de turboréacteur, comprenant les phases suivantes :
- forgeage pour obtenir des pièces brutes de forge ou ébauches de tronçons de virole et de cône de de sortie (8) telles que définies dans la revendication 3, la pièce brute de forge, ébauche du cône de sortie ne présentant pas d'évidement par rapport à l'enveloppe du cône de sortie;
- soudage bout-à-bout par friction des différents tronçons et du cône de sortie (8) ; et
- usinage des formes externes définitives du rotor.

5. Procédé selon la revendication 4, caractérisé en ce le le cône de sortie est en superalliage à base de nickel élaboré par "La Métallurgie des Poudres".

## Patentansprüche

1. Turboluftstrahltriebwerk mit einem Hochdruckverdichterrotor, der einen Mantelring und einen Austrittskonus (8) umfaßt, die im Innern des Rotors mit Schaufeln und Scheiben (9, 13) ausgestattet sind, um die von den Schaufeln auf den Körper des Rotors ausgeübten Zentrifugalkräfte auszugleichen,
**dadurch gekennzeichnet**,
daß gewisse Ausgleichscheiben (13) relativ zur Rotationsachse des Rotors konisch ausgebildet sind und keine Ausgleichmassen besitzen.

2. Turboluftstrahltriebwerk nach Anspruch 1,
**dadurch gekennzeichnet**,
daß die Ausgleichscheibe (13) in dem Austrittskonus (8) des Rotors zur stromaufwärtige Seite des Turboluftstrahltriebwerks hin geneigt ist.

3. Turboluftstrahltriebwerk nach Anspruch 2,
**dadurch gekennzeichnet**,
daß es eine Scheibe (9) mit einer Ausgleichmasse (9A) aufweist, die in dem stromaufwärtigen Teil des Austrittskonus (8) angeordnet ist.

4. Verfahren zur Herstellung eines Hochdruckverdichterrotors für ein Turboluftstrahltriebwerk mit folgenden Verfahrensschritten:
Schmieden, um Schmiederohstücke oder Rohlinge von Mantelringteilstücken und des Austrittskonus (8) zu gewinnen, wie sie in Anspruch 3 definiert sind, wobei das Schmiederohstück, das den Rohling des Austrittskonus bildet, gegenüber der Hüllfläche des Austrittskonus keine Vertiefung aufweist,
Reibungsstumpfschweißen der verschiedenen Teilstücke und des Austrittskonus (8) und
Herausarbeiten der endgültigen Außenformen des Rotors.

5. Verfahren nach Anspruch 4,
**dadurch gekennzeichnet**,
daß der Austrittskonus aus einer durch Pulvermetallurgie gewonnenen Superlegierung auf Nickelbasis besteht.

## Claims

1. Turbojet engine comprising a high-pressure compressor rotor itself comprising a ring and an outlet cone (8) which are equipped with bladings and with discs (9, 13) inside the rotor for compensating for the centrifugal forces applied by the bladings to the body of the rotor, characterized in that some compensation discs (13) are conical with respect to the axis of rotation (10) of the rotor and have no flyweights.

2. Turbojet engine according to Claim 1, characterized in that in the outlet cone (8) of the rotor, the compensation disc (13) is inclined in the upstream direction of the turbojet engine.

3. Turbojet engine according to Claim 2, characterized in that it comprises a disc (9) with a flyweight (9A) and placed in the upstream part of the outlet cone (8).

4. Method of manufacturing a rotor for a turbojet engine high-pressure compressor, comprising the following phases:
- forging in order to obtain forgings or blanks of sections of ring and of outlet cone (8) as defined in Claim 3, the forging, or blank of the outlet cone having no recesses with respect to the outer envelope of the outlet cone;
- friction butt-welding the various sections and outlet cone (8) together; and
- machining the final external shapes of the rotor.

5. Method according to Claim 4, characterized in that the outlet cone is made of a nickel-based superalloy made using "Powder Metallurgy".
